# EUROPEAN PATENT APPLICATION

(11) **EP 1 642 548 A2**
(43) Date of publication of application: **05.04.2006**
(21) Application number: 05018600.6
(22) Date of filing: 26.08.2005
(51) Int. Cl.: A61C 5/06, A61C 19/06

(54) **Tooth cleaner and applicator**

(30) Priority: 01.10.2004 US 957464; 09.03.2005 US 77244
(71) Applicant: Tsaur, Garry, Rowland Heights, CA 91748 (US)
(72) Inventor: Tsaur, Garry, Rowland Heights, CA 91748 (US)
(74) Representative: Viering, Jentschura & Partner

(57) **Abstract**

The tooth cleaner and applicator comprises of a tooth cleaning formula enclosed within a small elongated tubular container. An applicator tip may be affixed to the end of the small elongated tubular container. The tooth cleaning formula comprises of an acid selected from the group consisting of hydrochloric acid, phosphoric acid, and citric acid. The small elongated tubular container is a single-dose disposable plastic container with a sealed end. The acid neutralizer may be a base formula such as soda water or simply water to neutralize or dilute the acid. The tooth cleaner and applicator packaging comprises of a case enclosing the tooth cleaner and applicator and an acid neutralizer along with a small mirror.

## Description

### BACKGROUND-FIELD OF INVENTION

The present invention relates generally to a cleaner and applicator for cleaning teeth and their packaging. More specifically, the present invention relates to a formula and a single dose applicator to remove stains from the surface of a tooth and their packaging.

### BACKGROUND-DESCRIPTION OF RELATED ART

In modem society, cosmetically whiter teeth have always been desirable. Recently, however, whiter teeth have become increasingly popular and desirable. Various methods have been developed in an attempt to achieve this goal.

Inevitably teeth become stained over time from contact with coffee, tea, juice, tobacco, and other foods. Currently, there are three basic methods to remove this layer of stain and whiten the teeth. The first method requires one or more visit to a dentist's office and have the teeth professionally cleaned by a dentist. The second method uses an at-home bleaching kit that the user can apply at home. The third method uses whitening toothpastes and slowly whitens teeth over time with regular brushing of the teeth with the whitening toothpaste.

The first method is the most expensive but is the most effective of the three methods. A chairside bleaching requires one or more visits to a dentist's office. Each visit may take from 30 minutes to one hour. During the chairside bleaching, the dentist will apply either a protective gel to the gum or a rubber shield to protect the oral soft tissues. A bleaching agent is then applied to the teeth. Some procedures may use a special light, such as a laser light, to enhance the action of the agent. This first method requires taking time off from work or regular daily activity to schedule one or more appointments with a dentist, travel to the dentist's office, and remain there for 30 minutes to one hour for the procedure, assuming there are no waiting, and paying a large sum of money for the procedure.

The second method is more economical than visits to a dentist's office. The user may purchase an at-home bleaching kit over-the-counter from the local pharmacy or drug store to perform the whitening procedure himself at home. These products contain peroxides to actually bleach the tooth enamel. Most of these products rely on percent carbamide peroxide as the bleaching agent. Carbamide peroxide is generally available in several different concentrations such as 10%, 16%, and 22%. These products typically come in the form of a gel and are placed in a mouthguard. The actual application process varies. Some products are used for about twice a day for 2 weeks, and others are intended for overnight use for one to two weeks. A dentist may provide a custom-fitted mouthguard if the at-home bleaching kit is purchased from the dental office. This method has various side effects that may bother the user. The teeth can become sensitive during the period when the user is using the bleaching solution. Some user may experience soft tissue irritation-either from a mouthguard that doesn't fit properly or from solutions that may come in contact with the tissue. Furthermore, the whitening effect from this method is gradual and requires constant contact with the bleaching agent for hours at a time. This method also requires a delicate procedure of applying the bleaching agent in a generic mouth guard and inserting that mouthguard into the user's mouth for hours at a time. If the mouth guard is not custom fitted by a dentist, which is an expensive procedure, the mouth guard may be very uncomfortable to wear. Furthermore, a generic mouthguard may irritate the gum if improperly fitted.

The third method is the least effective but may be the least expensive. All toothpaste help remove surface stains through the action of mild abrasives. Some "whitening" toothpastes have special chemical or polishing agent that provide additional stain removal effectiveness. However, this method is the least effective and requires daily use over extended period of time.

One of the bleaching agent that have been experimented with is a relatively strong acid such as hydrochloric acid and phosphoric acid. The acid can effectively remove the stains from the surface of the tooth. However, this bleaching agent has not been successfully commercialized due to the highly corrosive nature of the acids and the difficulty of packaging and controlling the dosage and application of the acid. Even if the acids are contained in very small bottles, it is very difficult if not virtually impossible to accurately control the safe dosage and application of the acid to the tooth surface. There is also no convenient method of neutralizing the acid after application. Furthermore, a spill of even a small quantity of the acid will be very dangerous and difficult to clean-up. In addition, skin contact with the acid is highly likely with conventional packaging and application methods.

### BRIEF SUMMARY OF THE INVENTION

The present invention is a formula and a single dose applicator and a complete packaging for tooth cleaner and applicator comprising cotton swabs and formula to remove stains from the surface of a tooth. An object of the present invention is to provide a safe, simple, convenient, and effective means to effectively remove stains from the surface of a tooth and provide a packaging for the tooth cleaner and applicator. Another object of the present invention is to provide an accurately premeasured formula in a disposable single-dose applicator for removing stains from the surface of a tooth and the packaging for the applicator. Yet another object of the present invention is to provide a safe, simple, portable and convenient packaging for a tooth cleaner and applicator, a neutralizing or diluting agent, and a mirror.

The tooth cleaner and applicator comprises of a tooth cleaning formula enclosed within a small elongated tubular container. An applicator tip may optionally be affixed to the end of the small elongated tubular container. The formula comprises of an acid selected from the group consisting of hydrochloric acid, phosphoric acid, and citric acid. The small elongated tubular container is a single-dose disposable plastic container with a sealed end. The packaging comprises of a case enclosing the tooth cleaner and applicator and an acid neutralizer along with a small mirror. An optional protectant, such as a base formula, a gel, a cotton strip, a plastic or rubber film, or glycerin may be applied to the gum and soft tissues around the teeth to protect them from the acid before or after application to prevent tooth sensitivity. The acid neutralizer may be a base formula such as soda water or simply water to neutralize or dilute the acid.

### BRIEF DESCRIPTION OF THE DRAWINGS

Figure 1 shows the preferred embodiment of the tooth cleaner and applicator.
Figure 2 shows the preferred embodiment of the tooth cleaner and applicator in the operating position.
Figure 3 shows the preferred embodiment of the tooth cleaner and applicator packaging.
Figure 4 shows another embodiment of the tooth cleaner and applicator packaging.

### DETAILED DESCRIPTION OF THE PREFERRED EMBODIMENT

The following description and figures are meant to be illustrative only and not limiting. Other embodiments of this invention will be apparent to those of ordinary skill in the art in view of this description.

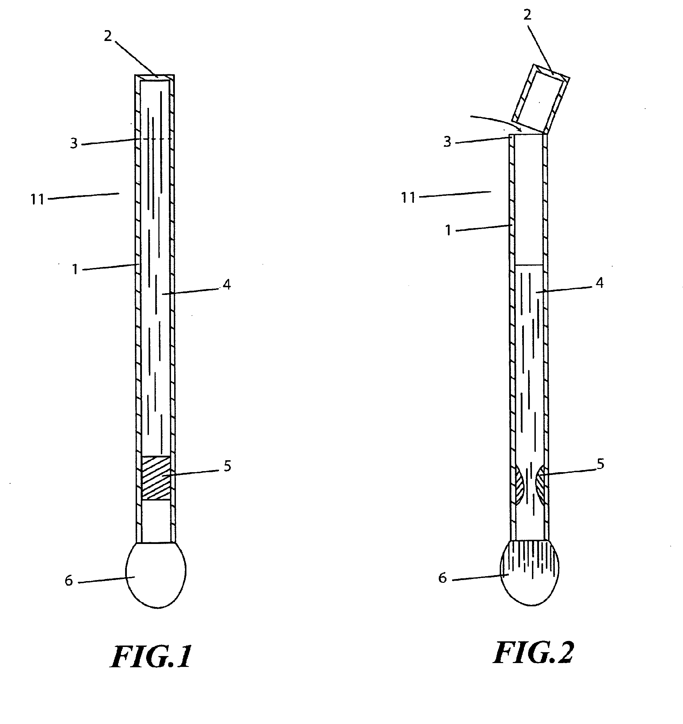

As shown in figure 1, the tooth cleaner and applicator comprises of a tooth cleaning formula **4** enclosed within a small elongated tubular container **1**. The small elongated tubular container **1** is a single-dose disposable plastic container with a sealed end **2**. The tooth cleaning formula **4** is disposed within the small elongated tubular container **1** near the sealed end **2.** A viscous substance **5** such as silicone is disposed between the open end of the small elongated tubular container **1** and the tooth cleaning formula **4** to prevent evaporation and contamination of the tooth cleaning formula **4**. An optional applicator tip **6** may be affixed to the open end of the small elongated tubular container **1**. An opening means **3** is positioned near the sealed end **2** of the small elongated tubular container **1** to enable opening of the small elongated tubular container **1** near the sealed end **2** to allow air to enter through the opening so as to release the tooth cleaning formula **4** through the open end of the small elongated tubular container **1**. In the preferred embodiment, the opening means **3** is a fracture line that will break open the small elongated tubular container **1** when the small elongated tubular container **1** is bent near the fracture line, as shown in figure 2. The small elongated tubular container **1** is preferably made of a plastic material such as polypropylene or polyethylene.

The small elongated tubular container **1** is preferably similar to the container disclosed in US patent number 5,702,035, which is fully incorporated herein. The small elongated tubular container **1** may also be similar to the containers disclosed in US patent application numbers 10/425,791 and 10/693,426, which are also fully incorporated herein.

The tooth cleaning formula **4** comprises of an acid selected from the group consisting of hydrochloric acid, phosphoric acid, and citric acid. In the preferred embodiment the tooth cleaning formula **4** comprises of 1% to 20% hydrochloric acid (HCl) with 5.4% being the most preferred. In another embodiment, the tooth cleaning formula **4** comprises of 5% to 50% phosphoric acid (H₃PO₄). In yet another embodiment, the tooth cleaning formula **4** comprises of citric acid (C₆H₈O₇). All three acids may be used concurrently or the three different acids may be mixed in any desired ratio and combination with each other.

The tooth cleaning formula **4** may additionally contain a fragrance, a flavoring, a colorant, or glycerin. The glycerin will increase the viscosity of the tooth cleaning formula **4** to control the application rate of the tooth cleaning formula **4**. The higher the viscosity, the slower the rate of flow of the tooth cleaning formula **4** out of the elongated tubular container **1**. By adjusting the viscosity, it is possible to control the rate of flow of the tooth cleaning formula **4** such that the tooth cleaning formula **4** will not simply run out of the elongated tubular container **1** and overflow the area of application.

An applicator tip **6** may optionally be affixed to the end of the small elongated tubular container **1**. The applicator tip **6** may be made of an absorbent material, such as cotton, foam, or sponge, or silicone rubber. Preferably, the applicator tip **6** has sufficient stiffness and roughness to effectively scrub the tooth surface.

In another embodiment, a powder such as aluminum oxide (Al₂O₃) or silicone carbide (SiC) is impregnated in the applicator tip **6** to further increase the effectiveness of the applicator tip **6**. The powder increases the effectiveness of tooth cleaning by providing an abrasive to increase the scrubbing effectiveness of the applicator tip **6** on the tooth surface. The powder may also be provided in a separate small container to be used along with the applicator tip **6** of the small elongated tubular container **1**. The powder is retrieved from the small container by the applicator tip **6** after the tooth cleaning formula **4** is released into the applicator tip **6** to moisten it.

A protectant in the form of a liquid, gel, or powder, or a cotton strip, plastic shield, or rubber shield may be used to protect the gum and the soft tissues around the teeth. The protectant may be glycerin. The protectant may also be a base formula to neutralize the tooth cleaning formula **4**. The preferred base formula may be either sodium bicarbonate (NaHCO₃) or sodium carbonate (Na₂CO₃). Naturally, any other suitable base formula may be used. In the preferred embodiment, the protectant is enclosed in a small elongated tubular container similar to the tooth cleaning formula **4** container, such as the container disclosed in US patent number 5,702,035. In another embodiment, the protectant may be contained in a separate compartment within the same elongated tubular container as the tooth cleaning formula **4**, such as the container disclosed in US patent application number 10/693,426. The base formula protectant may be applied either before or after the application of the tooth cleaning formula **4** to neutralize the tooth cleaning formula **4** on the gum and soft tissues around the teeth.

The tooth cleaner and applicator, the protectant in the form of a cotton strip, plastic shield, or rubber shield, and the base formula in a separate small elongated tubular container may be packaged in a kit in different combinations. The tooth cleaner and applicator may be packaged with the protectant in a two component kit. The tooth cleaner and applicator may also be packaged with the base formula in a small elongated tubular container in a two component kit. All three components may also be packaged together into a three component kit. The packaging may be in the form of a small plastic box with divided compartments within it to place the different components into.

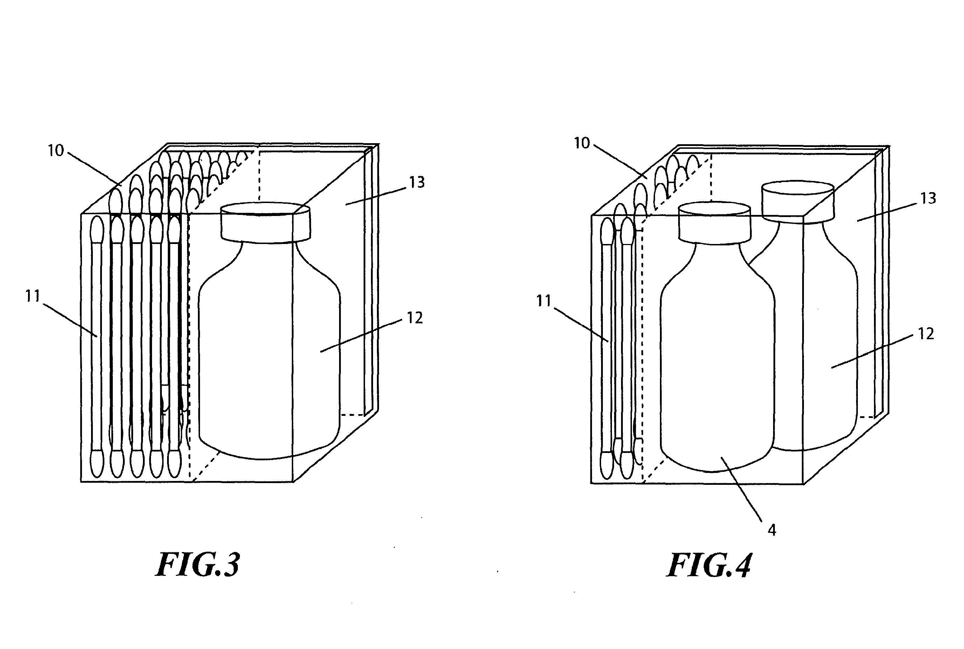

As shown in figure 3, the tooth cleaner and applicator packaging comprises of a case **10**, preferably a rectangular cardboard or plastic box. Enclosed within the case **10** are one or more tooth cleaner and applicator **11** and an acid neutralizer **12** along with a small mirror **13**. The tooth cleaner **4** is enclosed within a small elongated tubular container **1**. The small elongated tubular container **1** is a single-dose disposable plastic container with a sealed end **2**. The tooth cleaning formula **4** is disposed within the small elongated tubular container **1** near the sealed end **2**. A viscous substance **5** such as silicone, polyisobutylene, polybutenes, or a combination of polyisobutylene and polybutenes is disposed between the open end of the small elongated tubular container **1** and the tooth cleaning formula **4** to prevent evaporation and contamination of the tooth cleaning formula **4**. An optional applicator tip **6** may be affixed to the open end of the small elongated tubular container **1**. As shown in figures 1 and 2, an opening means **3** is positioned near the sealed end **2** of the small elongated tubular container **1** to enable opening of the small elongated tubular container **1** near the sealed end **2** to allow air to enter through the opening so as to release the tooth cleaning formula **4** through the open end of the small elongated tubular container **1**. In the preferred embodiment, the opening means **3** is a fracture line that will break open the small elongated tubular container **1** when the small elongated tubular container **1** is bent near the fracture line. The small elongated tubular container **1** is preferably made of a plastic material such as polypropylene or polyethylene.

The small elongated tubular container **1** is preferably similar to the container disclosed in US patent number 5,702,035, which is fully incorporated herein. The small elongated tubular container **1** may also be similar to the containers disclosed in US patent application numbers 10/425,791 and 10/693,426, which are also fully incorporated herein.

The tooth cleaning formula **4** comprises of an acid selected from the group consisting of hydrochloric acid, phosphoric acid, and citric acid. In the preferred embodiment the tooth cleaning formula **4** comprises of 1% to 20% hydrochloric acid (HCl) with 5.4% being the most preferred. In another embodiment, the tooth cleaning formula **4** comprises of 5% to 50% phosphoric acid (H₃PO₄). In yet another embodiment, the tooth cleaning formula **4** comprises of citric acid (C₆H₈O₇). All three acids may be used concurrently or the three different acids may be mixed in any desired ratio and combination with each other.

The tooth cleaning formula **4** may additionally contain a fragrance, a flavoring, a colorant, or glycerin. The glycerin will increase the viscosity of the tooth cleaning formula **4** to control the application rate of the tooth cleaning formula **4**. The higher the viscosity, the slower the rate of flow of the tooth cleaning formula **4** out of the elongated tubular container **1**. By adjusting the viscosity, it is possible to control the rate of flow of the tooth cleaning formula **4** such that the tooth cleaning formula **4** will not simply run out of the elongated tubular container **1** and overflow the area of application.

An applicator tip **6** may optionally be affixed to the end of the small elongated tubular container **1**. The applicator tip **6** may be made of an absorbent material, such as cotton, foam, sponge, or silicone rubber. Preferably, the applicator tip **6** has sufficient stiffness and roughness to effectively scrub the tooth surface.

In another embodiment, a powder such as aluminum oxide (Al₂O₃) or silicone carbide (SiC) is impregnated in the applicator tip **6** to further increase the effectiveness of the applicator tip **6**. The powder increases the effectiveness of tooth cleaning by providing an abrasive to increase the scrubbing effectiveness of the applicator tip **6** on the tooth surface. The powder may also be provided in a separate small container to be used along with the applicator tip **6** of the small elongated tubular container **1**. The powder is retrieved from the small container by the applicator tip **6** after the tooth cleaning formula **4** is released into the applicator tip **6** to moisten it.

Also enclosed in the case **10** is an acid neutralizer **12** such as a base formula to neutralize the tooth cleaning formula **4**. The preferred base formula may be either sodium bicarbonate (NaHCO₃) or sodium carbonate (Na₂CO₃). Naturally, any other suitable base formula may be used. In the preferred embodiment, the acid neutralizer **12** is enclosed in a small elongated tubular container similar to the tooth cleaning formula **4** container, such as the container disclosed in US patent number 5,702,035. In another embodiment, the acid neutralizer **12** may be contained in a separate compartment within the same elongated tubular container as the tooth cleaning formula **4**, such as the container disclosed in US patent application number 10/693,426. Alternatively, the acid neutralizer **12** may also be contained in a separate container such as a small plastic bottle. The acid neutralizer **12** may be applied either before or after the application of the tooth cleaning formula **4** to neutralize the tooth cleaning formula **4** on the teeth, gum, and soft tissues around the teeth.

As shown in figure 3, the tooth cleaner and applicator **11**, the acid neutralizer **12** in a separate container, and a small mirror **13** are packaged within a case **10**. In the preferred embodiment, the packaging is a case **10** in the form of a small cardboard or plastic box enclosing the applicator **11** with the tooth cleaner, the acid neutralizer **12**, and a small mirror **13**. The case **10** may have a divider within it to physically separate the applicator **11** and the neutralizer **12** container. The small mirror **13** may be made of plastic, glass, aluminum, or any other material with a reflective surface. The small mirror **13** may be placed inside the case **10** or it may be affixed to the outside of the case **10**. The small mirror **13** is conveniently used while applying the tooth cleaner and also while applying the acid neutralizer **12**. The small mirror **13** can also be used to inspect the result of the tooth cleaning process.

As shown in figure 4, the tooth cleaning formula **4** may also be contained in a separate container alone with tooth cleaner and applicator **11**, which may be simply common cotton swabs, the acid neutralizer **12**, and a small mirror **13** in the case **10**.

Although the invention has been described in terms of particular embodiments and applications, one of ordinary skill in the art; in light of this teaching, can generate additional embodiments and modifications without departing from the spirit of or exceeding the scope of the claimed invention. Accordingly, it is to be understood that the drawings and descriptions herein are proffered by way of example to facilitate comprehension of the invention and should not be construed to limit the scope thereof.

## Claims

1. A tooth cleaner and applicator comprising:
an elongated tubular container 1 with a sealed end 2; and
an acid disposed within said elongated tubular container 1.

2. A tooth cleaner and applicator as in claim 1, wherein said elongated tubular container 1 is made of plastic.

3. A tooth cleaner and applicator as in claim 2, wherein said plastic is selected from the group consisting polypropylene and polyethylene.

4. A tooth cleaner and applicator as in claim 1, wherein an opening means 3 is provided near said sealed end 2 of said elongated tubular container.

5. A tooth cleaner and applicator as in claim 4, wherein said opening means 3 is a fracture line.

6. A tooth cleaner and applicator as in claim 1, wherein a viscous substance 5 is disposed between said acid and an open end of said elongated tubular container 1.

7. A tooth cleaner and applicator as in claim 6, wherein said viscous substance 5 is silicone.

8. A tooth cleaner and applicator as in claim 1, wherein said acid is selected from the group consisting hydrochloric acid, phosphoric acid, and citric acid.

9. A tooth cleaner and applicator as in claim 8, wherein said hydrochloric acid has a concentration of 1 percent to 20 percent.

10. A tooth cleaner and applicator as in claim 9, wherein said hydrochloric acid has a concentration of 5.4 percent.

11. A tooth cleaner and applicator as in claim 8, wherein said phosphoric acid has a concentration of 5 percent to 50 percent.

12. A tooth cleaner and applicator as in claim 1, wherein an additional ingredient selected from the group consisting a fragrance, a flavoring, a colorant, and glycerin is added to the acid.

13. A tooth cleaner and applicator as in claim 1, wherein an applicator tip 6 is affixed to an end of said elongated tubular container 1.

14. A tooth cleaner and applicator as in claim 13, wherein said applicator tip 6 is made of cotton, foam, sponge, or silicone rubber.

15. A tooth cleaner and applicator as in claim 1, wherein a protectant is disposed in an elongated tubular container 1 with a sealed end 2 for neutralizing said acid.

16. A tooth cleaner and applicator as in claim 15, wherein said protectant is glycerin.

17. A tooth cleaner and applicator as in claim 15, wherein said protectant is a base formula.

18. A tooth cleaner and applicator as in claim 17, wherein said base formula 4 is sodium bicarbonate or sodium carbonate.

19. A tooth cleaner and applicator as in claim 1, wherein a protective shield is provided to isolate said acid from a surface.

20. A tooth cleaner and applicator as in claim 19, wherein said protective shield is a cotton strip, plastic shield, or rubber shield.

21. A tooth cleaner and applicator comprising:
an elongated tubular container 1 with a sealed end 2;
an acid disposed within said elongated tubular container 1;
an applicator tip 6 affixed to an end of said elongated tubular container 1; and
a substance impregnated in said applicator tip 6.

22. A tooth cleaner and applicator as in claim 21, wherein said substance is aluminum oxide or silicone carbide.

23. A tooth cleaner and applicator as in claim 21, wherein said substance is provided in a container for retrieval by said applicator tip 6.

24. A tooth cleaner and applicator as in claim 23, wherein said substance is aluminum oxide or silicone carbide.

25. A tooth cleaner and applicator as in claim 21, wherein a protectant is disposed in an elongated tubular container 1 with a sealed end 2 for neutralizing said acid.

26. A tooth cleaner and applicator as in claim 25, wherein said protectant is glycerin.

27. A tooth cleaner and applicator as in claim 25, wherein said protectant is a base formula.

28. A tooth cleaner and applicator as in claim 27, wherein said base formula is sodium bicarbonate or sodium carbonate.

29. A tooth cleaner and applicator as in claim 21, wherein a protective shield is provided to isolate said acid from a surface.

30. A tooth cleaner and applicator as in claim 29, wherein said protective shield is a cotton strip, plastic shield, or rubber shield.

31. A tooth cleaner and applicator kit comprising:
a container;
an elongated tubular container 1 with a sealed end 2 with an acid enclosed within said elongated tubular container 1 disposed within said container; and
a protective shield disposed within said container.

32. A tooth cleaner and applicator kit comprising:
a container;
an elongated tubular container 1 with a sealed end 2 with an acid enclosed
within said elongated tubular container 1 disposed within said container; and
a protectant disposed in an elongated tubular container 1 with a sealed end 2
disposed within said container.

33. A tooth cleaner and applicator kit comprising:
a container;
an elongated tubular container 1 with a sealed end 2 with an acid enclosed
within said elongated tubular container 1 disposed in said container;
a protective shield disposed within said container; and
a protectant disposed in an elongated tubular container 1 with a sealed end 2
disposed within said container.

34. A tooth cleaner and applicator kit as in claims 31, 32, or 33, wherein said container is a small plastic case.

35. A tooth cleaner and applicator kit as in claims 31, 32, or 33, wherein said acid is selected from the group consisting hydrochloric acid, phosphoric acid, and citric acid.

36. A tooth cleaner and applicator kit as in claims 32 or 33, wherein said protectant is glycerin, sodium bicarbonate, or sodium carbonate.

37. A tooth cleaner and applicator packaging comprising:
a case 10;
an acid disposed within said case 10;
an acid neutralizer 12 disposed within said case 10; and
a mirror 13 disposed within said case 10.

38. A tooth cleaner and applicator packaging as in claim 37, wherein said acid is disposed within an elongated tubular housing with a sealed end 2.

39. A tooth cleaner and applicator packaging as in claim 38, wherein said elongated tubular container 1 is made of plastic.

40. A tooth cleaner and applicator packaging as in claim 39, wherein said plastic is selected from the group consisting polypropylene and polyethylene.

41. A tooth cleaner and applicator packaging as in claim 38, wherein an opening means 3 is provided near said sealed end of said elongated tubular container.

42. A tooth cleaner and applicator packaging as in claim 41, wherein said opening means 3 is a fracture line.

43. A tooth cleaner and applicator packaging as in claim 41, wherein a viscous substance 5 is disposed between said acid and an open end of said elongated tubular container 4.

44. A tooth cleaner and applicator packaging as in claim 43, wherein said viscous substance 5 is silicone, polyisobutylene, polybutenes, or a combination of polyisobutylene and polybutenes.

45. A tooth cleaner and applicator packaging as in claim 37, wherein said acid is selected from the group consisting hydrochloric acid, phosphoric acid, and citric acid.

46. A tooth cleaner and applicator packaging as in claim 38, wherein an applicator tip 6 is affixed to an end of said elongated tubular container 1.

47. A tooth cleaner and applicator packaging as in claim 46, wherein said applicator tip 6 is made of cotton, foam, sponge, or silicone rubber.

48. A tooth cleaner and applicator packaging as in claim 37, wherein said acid neutralizer is a base formula 4.

49. A tooth cleaner and applicator packaging as in claim 48, wherein said base formula 4 is sodium bicarbonate or sodium carbonate.

50. A tooth cleaner and applicator packaging comprising:
a case 10;
cotton swabs;
an acid disposed within said case 10;
an acid neutralizer 12 disposed within said case 10; and
a mirror 13 disposed within said case 10.

51. A tooth cleaner and applicator packaging as in claim 50, wherein said acid is selected from the group consisting hydrochloric acid, phosphoric acid, and citric acid.

52. A tooth cleaner and applicator packaging as in claim 50, wherein said acid neutralizer 12 is a base formula 4.

53. A tooth cleaner and applicator packaging as in claim 52, wherein said base formula 4 is sodium bicarbonate or sodium carbonate.

54. A tooth cleaner and applicator packaging comprising:
a case 10;
cotton swabs;
an acid disposed within said case;
an acid neutralizer 12 disposed within said case 10; and
a mirror 13 affixed to said case 10.
